# EUROPEAN PATENT SPECIFICATION

(11) **EP 2 123 939 B1**
(45) Date of publication and mention of the grant of the patent: **02.03.2011**
(21) Application number: 09159174.3
(22) Date of filing: 30.04.2009
(51) Int. Cl.: F16H 21/04, F16F 3/02, F16C 25/08, F16H 21/44

(54) **Force applying mechanism**
Kraftanwendungsmechanismus
Mécanisme d'application de force

(30) Priority: 21.05.2008 GB 0809231
(43) Date of publication of application: 25.11.2009
(73) Proprietor: ESR Technology Ltd, Birchwood Park Warrington Cheshire WA3 6FW (GB)
(72) Inventor: Munro, Grant, Warrington, Cheshire WA3 6FW (GB)
(74) Representative: Mansfield, Peter Turquand

(56) References cited:
- EP-A- 1 262 676
- FR-A- 2 512 905
- GB-A- 617 076
- US-A- 4 615 591

## Description

The present invention relates to a mechanism for applying a force between two elements, and in particular for providing an adjustable force, the mechanism providing a force amplification.

A force amplification mechanism is described in EP 1 262 676, for example for applying a pre-load to a bearing, the mechanism being suitable for use in a spacecraft. The mechanism consists of upper and lower coaxial thrust rings linked so they can undergo limited axial movement, and an intermediate ring connected to the upper and lower thrust rings by thin strut elements in radial planes. A limited turning of the intermediate ring changes the orientation of the strut elements, and hence the axial separation between the upper and lower thrust rings. Although such a structure is very effective, its manufacture is complex; a further potential problem is that (for a given axial force) the smaller the diameter of the mechanism, the larger the torsion stresses in the strut elements. This arises because the stresses in the strut elements are bending and torsion; the amount of bending depends on the linear distance through which the intermediate ring is moved, whereas the torsion depends on the angle through which it is moved. A mechanism of a smaller diameter requires that the intermediate ring is turned through a greater angle to achieve the same linear displacement, so the torsion stresses are greater.

According to the present invention there is provided a force applying mechanism comprising first and second end elements spaced apart along a longitudinal axis, and linked so they can undergo limited axial movement relative to each other, and an intermediate element located between the first and second end elements and connected to the first end element and to the second end element by flexible struts at locations that, in transverse sectional view, form a two-dimensional array, wherein all the flexible struts between the intermediate element and the first end element have preferred bending directions that are parallel to each other and to a transverse direction, and the flexible struts between the intermediate element and the second end element have preferred bending directions that are parallel to each other and to the said transverse direction.

It will be appreciated that where a flexible strut consists, for at least part of its length, of a resilient strip, it has a preferred bending direction perpendicular to the major surface of the strut. Hence the struts are arranged to extend substantially parallel to each other along their lengths, and are such that in a sectional view transverse to the longitudinal axis the flexible struts lie on substantially parallel lines.

Preferably the flexible struts between the intermediate element and the first end element are arranged as groups of adjacent struts, and the groups are arranged at locations such that in transverse sectional view the locations (not the struts themselves) form an array, and preferably the array of locations has rotational symmetry about the axis. Preferably the flexible struts between the intermediate element and the second end element are arranged in the same fashion. For example the groups of struts may be at locations that form a hexagonal array, preferably a regular hexagonal array. Alternatively the groups of struts may be at locations that form a square array, or an octagonal array. There may be equal numbers of struts within each group, for example three or four struts within each group.

The flexible struts may be of uniform flexibility along their length, being of consistent width and breadth. Alternatively the flexible struts are not of uniform flexibility along their length, preferably having flexible portions near each end linked by a substantially inflexible portion which may be of greater thickness. This arrangement, with the substantially rigid portion at the middle of each flexible strut, provides a higher buckling limit for the flexible struts.

Preferably the components that form the force-applying mechanism, including the first and second end elements, the intermediate element, and the flexible struts, are integral with each other and are formed from a single block of material. For example they may be formed from a suitably shaped block of metal (such as titanium) machined by a wire cutting process. A preferred embodiment is machined by just two successive wire cutting processes, holding the block of metal in just two different orientations. This is possible because all the flexible struts are parallel to each other. The accurately parallel alignment of the flexible struts is ensured by such a manufacturing process, as this avoids the risk of heat deformation during a welding process.

Preferably the first and second end elements are generally ring-shaped, defining a central aperture through the mechanism. Hence the mechanism may be used to apply a preload to a bearing, where the bearing is on a shaft that extends through the central aperture of the mechanism. It will be appreciated that the mechanism provides a considerable mechanical advantage (i.e. force amplification) while maintaining parallel alignment, as movement of the intermediate element through a distance of say 1000 µm (1 mm) brings about an axial movement of the end elements by say 70 µm, thus allowing the output load to be varied. The relationship between input and output loads is highly non-linear and depends on several factors including the axial stiffness of the bearings, i.e. their axial load/deflection characteristic, (and internal load path) and the position of the intermediate element, however a mechanical advantage is afforded by the fact that the range of input loads may be small compared to the range of output loads. For example several kN of preload may be sustained by just a few tens of newtons of input loading at the intermediate element.

In a preferred embodiment the second end element is linked by resilient flat springs to at least two substantially rigid pillars projecting from the first end element, the resilient flat springs allowing limited relative movement along the longitudinal axis. Preferably there is a pair of such rigid pillars arranged on opposite sides of the longitudinal axis, a line joining the centres of the pillars being parallel to the aforesaid transverse direction.

The invention will now be further and more particularly described, by way of example only, and with reference to the accompanying drawings in which:

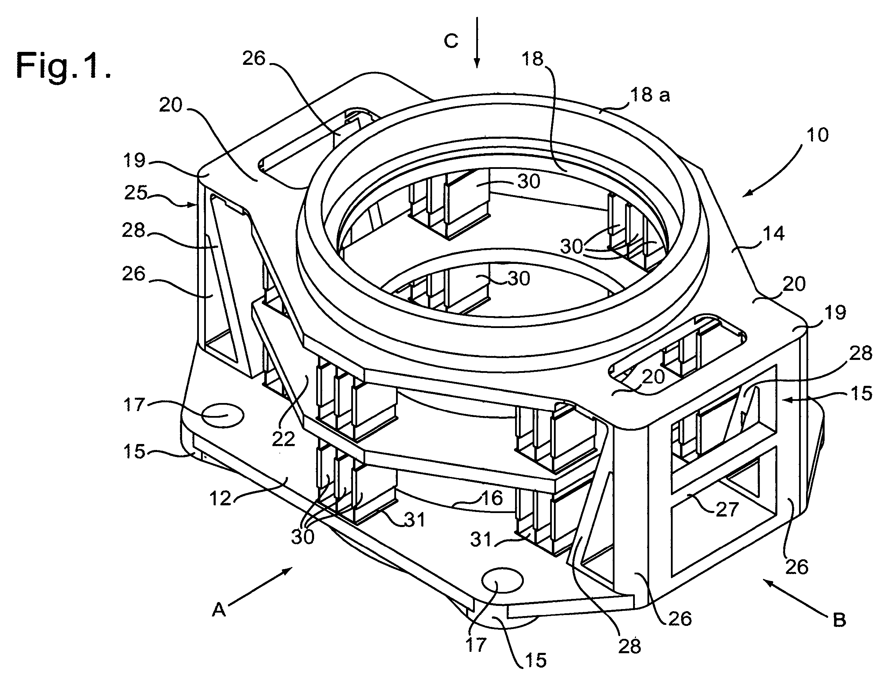

Figure 1 shows a perspective view of a force applying mechanism of the invention;
Figure 2 shows an elevation in the direction of arrow A in figure 1;
Figure 3 shows an elevation in the direction of arrow B of figure 1; and
Figure 4 shows a plan view in the direction of arrow C of figure 1.

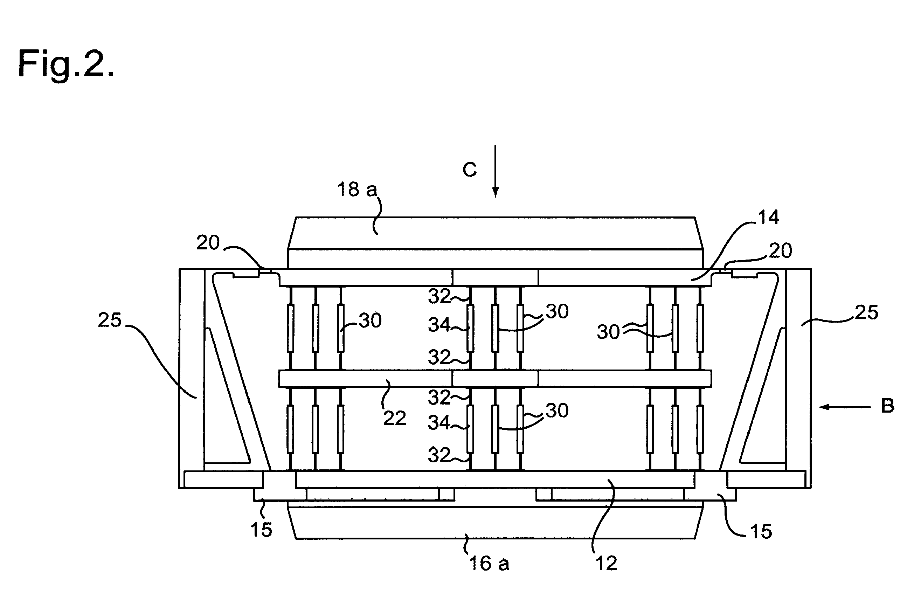

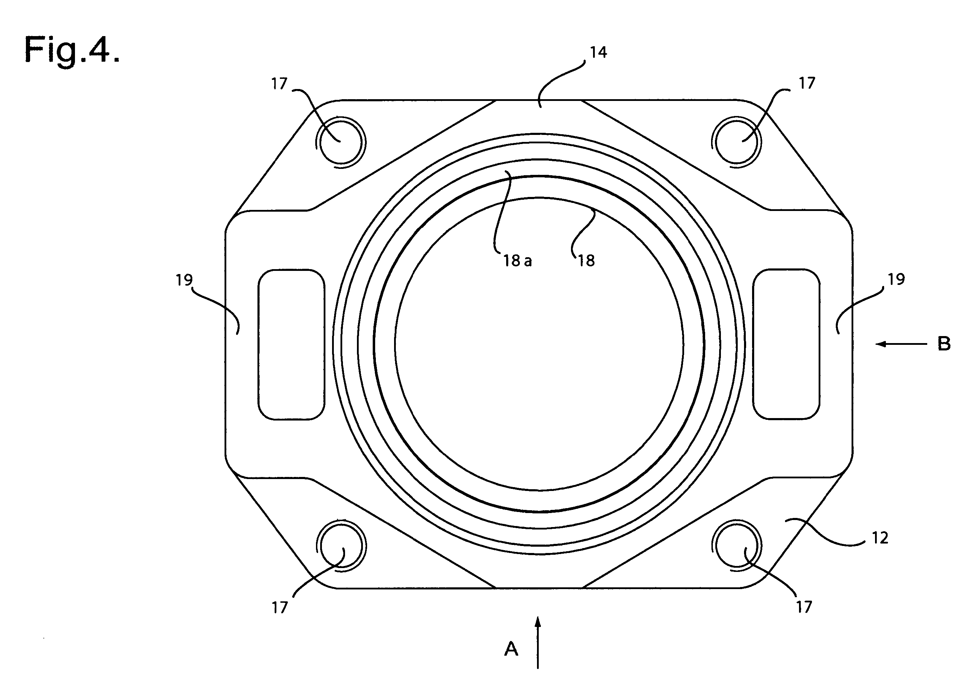

Referring to the drawings, a force applying mechanism 10 comprises a base plate 12 and a top plate 14. The base plate 12 is generally rectangular, with cut-off corners, and defines a circular central aperture 16 for a shaft. It is also provided with four mounting holes 17 near the corners (see in particular figure 4) defined through thicker plate regions 15 that project below the bottom of the plate 12 and define an accurately flat lower plane. The top plate 14 is of generally similar shape to the base plate 12, with end portions 19 directly above the ends of the base plate 12, and also defines a circular central aperture 18 for the shaft, but the corners are cut-off to a greater extent so in plan it has narrow octagonal shape from which the end portions 19 project. Each end portion 19 in plan defines a generally rectangular aperture, and the portions on either side of this aperture have thin portions so as to constitute spring elements 20 (see also figure 2). Halfway between the base plate 12 and the top plate 14 is an octagonal intermediate plate 22, which also defines a circular central aperture 24 with clearance for the shaft. The base plate 12 and the top plate 14 include rings 16a and 18a around the apertures 16 and 18 respectively, to provide seats for bearings (not shown) to support the shaft.

The apertures 16, 24 and 18 are aligned, and their centres define a longitudinal axis of the mechanism 10 (parallel to arrow C). A line linking the centres of the apertures in the end portions 19 defines a direction (parallel to arrow B) transverse to that longitudinal axis; this transverse direction is also parallel to the longer sides of the base plate 12.

At the ends of the base plate 12 are pillars 25 each in the form of two corner struts 26 extending perpendicular to the base plate 12, linked to each other by a bar 27 that is parallel to the base plate 12, and also provided with inclined struts 28 between the tops of the corner struts 26 and the base plate 12; the tops of the corner struts 26 are linked by the end portions 19 of the top plate 14. All of these components are integral with each other.

The intermediate plate 22 is connected to the base plate 12 by eighteen flexible strut elements 30 arranged in six groups of three, these groups forming a hexagonal array (in plan). All the flexible strut elements 30 are in parallel planes, so that the preferred bending direction for each element 30 is in a direction parallel to the previously-mentioned transverse direction (parallel to arrow B). Similarly the intermediate plate 22 is connected to the top plate 14 by another eighteen flexible strut elements 30 arranged in six groups of three, and in this example the flexible strut elements 30 above and below the intermediate plate 22 are aligned with each other. Again, all the flexible strut elements 30 are in parallel planes, so that the preferred bending direction for each element 30 is parallel to the transverse direction (parallel to arrow B). Each flexible strut element 30 consists of thin flexible end portions 32 while the middle portion 34, approximately 50% of the total length, is thicker to aid the load carrying capability of the strut.

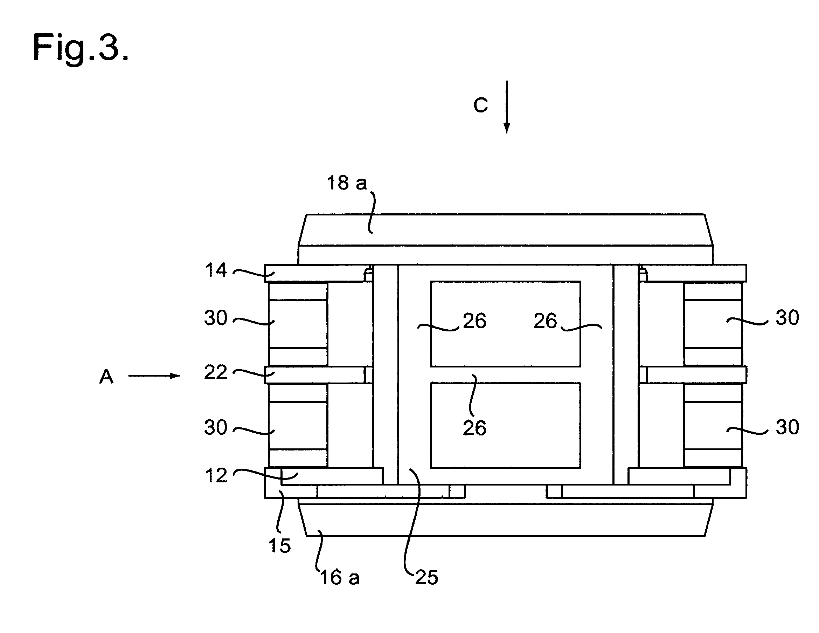

All the components described above are integral, and may be made from a block of metal (such as titanium) for example by machining from above and below to form the apertures 16, 18 and 24, followed by a sequence of wire cutting (i.e. electrical discharge machining) steps. All the flexible strut elements 30 are in parallel planes and are of the same width as the corner struts 26, so that these cutting steps require the block to be held in only two different orientations for cutting in directions perpendicular to the longitudinal axis: one corresponding to the view in figure 2 and the other corresponding to the view in figure 3. Each of these wire cutting steps may be carried out in two stages: a coarse electrical discharge machining step to cut out the gaps between the groups of spring elements 30, and then a fine electrical discharge machining step to cut out the individual spring elements 30 and their junction with the plates. (Consequently there is a square region 31 around the join between each group of spring elements 30 and the adjacent plate 12, 14 or 22, where the plate has only been subjected to fine electrical discharge machining.)

The top plate 14 can thus move, to a limited extent, in a direction parallel to the longitudinal axis (parallel to arrow C), by virtue of the spring elements 20. The spring elements 30 are shown as lying in planes orthogonal to the base plate 12, and this orientation of the spring elements 30 provides the greatest separation between the top plate 14 and the base plate 12. This position may be referred to as the top dead centre position. Movement of the intermediate plate 22 in the transverse direction (parallel to arrow B) causes the spring elements 30 to bend, and so moves the top plate 14 closer towards the base plate 12. By way of example transverse movement of the intermediate plate by 1.5 mm may move the top plate 14 through 100 µm longitudinally. This movement of the intermediate plate 22 may be brought about by any conventional actuator, and such an actuator may be located in the space between the pillar 25 and the intermediate plate 22, at one end of the plate 22, or there may be two such actuators, one at each end. For example the actuator may exert a force up to 100 N, so that the axial force would be up to 1500 N.

Preferably stops are provided to permit the intermediate plate 22 to move away from the top dead centre position by only a small distance (e.g. 0.1 mm) in one direction, and by no more than say 1.5 mm in the opposite direction. These may be mechanical stops abutting the ends of the intermediate plate 22, or they may be stops that limit movement of the actuator.

It will be appreciated that the mechanism 10 described above is by way of example only, and that it may be modified in many ways while remaining within the scope of the present invention. For example there may be a different number of groups of spring elements, for example four or eight groups. The numbers of spring elements within any one group may differ: for example there may be from one to twelve spring elements within a group, although preferably no more than five; and the numbers within any group may vary within an array, for example with some groups having fewer spring elements than other groups. The spring elements on opposite sides of the intermediate plate may be arranged in positions that are not in alignment with each other, as long as the preferred bending directions are all parallel to the transverse direction (arrow B). And some or all of the spring elements may be of uniform thickness along their length rather than having a thicker, less flexible central portion.

The mechanism 10 as described above may be used to provide an axial load to a bearing. It should be appreciated that it may alternatively be used in a wide range of different applications, in particular applications in which high loads are to be applied, and in which the flatness and parallelism of interfaces is important, or in which alignment must be maintained during positioning. Some other specific applications are as follows:
(a) Active damping mechanisms
(b) Braking mechanisms
(c) Clutch mechanisms
(d) Hold down/latching/load bypass mechanisms:
   i. Launch locks
   ii. Protective lock down mechanisms for sensitive hardware/instruments
   iii. Air/spacecraft release mechanisms
(e) Interface preload/separation mechanisms:
   i. Active thermal interfaces
   ii. Active mechanical seals
   iii. Controlled labyrinth seals
   iv. Dosing or flow control mechanisms
(f) Positioning mechanisms
   i. Sample placement in particle accelerators
   ii. Precision robotic devices
   iii. Slit control (fluids or light/spectrometry)
   iv. Structural compensation mechanisms - eg thermal compensation
   v. Positioning during nano-fabrication
   vi. Image stabilisation (fast response)
   vii. Piezo-device amplifier - use in reverse
(g) Focus/Pointing mechanisms
   i. Micro-refocusing
   ii. Conical or segmented mirror pointing (g) Alternative to piezo-actuation (in non-piezo-friendly applications (e.g. extreme temperature, partial vacuum environment (discharge risk), radiation or similar)

## Claims

1. A force applying mechanism (10) comprising first and second end elements (12, 14) spaced apart along a longitudinal axis, and linked so they can undergo limited axial movement relative to each other, and an intermediate element (22) located between the first and second end elements and connected to the first end element and to the second end element by flexible struts (30) at locations that, in transverse sectional view, form a two-dimensional array, **characterised in that** all the flexible struts between the intermediate element and the first end element have preferred bending directions that are parallel to each other and to a transverse direction, and the flexible struts between the intermediate element and the second end element have preferred bending directions that are parallel to each other and to the said transverse direction.

2. A mechanism as claimed in claim 1 wherein the flexible struts between the intermediate element and the first end element are arranged as groups of adjacent struts, and the groups are arranged at locations such that in transverse sectional view the locations form a two-dimensional array, and the flexible struts between the intermediate element and the second end element are arranged as groups of adjacent struts, and the groups are arranged at locations such that in transverse sectional view the locations form a two-dimensional array.

3. A mechanism as claimed in claim 2 wherein the array of locations has rotational symmetry about the axis.

4. A mechanism as claimed in any one of the preceding claims wherein the flexible struts on opposite sides of the intermediate element are attached to the intermediate element directly opposite each other.

5. A mechanism as claimed in any one of the preceding claims wherein the flexible struts are arranged as groups of adjacent struts on both sides of the intermediate element, and there are equal numbers of struts within each group.

6. A mechanism as claimed in any one of the preceding claims wherein the second end element is linked by resilient flat springs to at least two substantially rigid pillars projecting from the first end element, the resilient flat springs allowing the limited axial movement.

7. A mechanism as claimed in any one of the preceding claims wherein the flexible struts are not of uniform flexibility along their length, having flexible portions near each end linked by a substantially inflexible portion.

8. A mechanism as claimed in any one of the preceding claims wherein the first and second end elements, the intermediate element, and the flexible struts, are integral with each other and are formed from a single block of material.

9. A mechanism as claimed in any one of the preceding claims wherein the first and second end elements are generally ring-shaped, defining a central aperture through the mechanism, so the mechanism may be used to apply a preload to a bearing, where the bearing is on a shaft that extends through the central aperture of the mechanism.

## Patentansprüche

1. Ein Mechanismus (10) zur Kraftaufbringung, das erste und zweite Endelemente (12, 14), die entlang einer Längsachse beabstandet und derart verbunden sind, dass sie eine eingeschränkte axiale Bewegung relativ zueinander eingehen können, und ein Zwischenelement (22) umfasst, das zwischen den ersten und zweiten Endelementen positioniert und mit dem ersten Endelement und mit dem zweiten Endelement durch flexible Streben (30) an Stellen verbunden ist, die bei schräger Schnittansicht eine zweidimensionale Anordnung bilden, **dadurch gekennzeichnet, dass** sämtliche der flexiblen Streben zwischen dem Zwischenelement und dem ersten Endelement bevorzugte Biegerichtungen besitzen, die zueinander und zu einer Schrägrichtung parallel sind, und die flexiblen Streben zwischen dem Zwischenelement und dem zweiten Endelement bevorzugte Biegerichtungen besitzen, die zueinander und zu der Schrägrichtung parallel sind.

2. Ein Mechanismus wie in Anspruch 1 beansprucht, wobei die flexiblen Streben zwischen dem Zwischenelement und dem ersten Endelement als Gruppen von benachbarten Streben angeordnet sind und die Gruppen an solchen Stellen angeordnet sind, dass bei schräger Schnittansicht die Stellen eine zweidimensionale Anordnung bilden, und die flexiblen Streben zwischen dem Zwischenelement und dem zweiten Endelement als Gruppen von benachbarten Streben angeordnet sind und die Gruppen an solchen Stellen angeordnet sind, dass bei schräger Schnittansicht die Stellen eine zweidimensionale Anordnung bilden.

3. Ein Mechanismus wie in Anspruch 2 beansprucht, wobei die Anordnung von Stellen eine Rotationssymmetrie um die Achse herum besitzt.

4. Ein Mechanismus wie in einem der vorstehenden Ansprüche beansprucht, wobei die flexiblen Streben an entgegengesetzten Seiten des Zwischenelements an dem Zwischenelement direkt entgegengesetzt zueinander befestigt sind.

5. Ein Mechanismus wie in einem der vorstehenden Ansprüche beansprucht, wobei die flexiblen Streben als Gruppen von benachbarten Streben an beiden Seiten des Zwischenelements angeordnet sind und eine gleiche Anzahl von Streben innerhalb jeder Gruppe vorhanden ist.

6. Ein Mechanismus wie in einem der vorstehenden Ansprüche beansprucht, wobei das zweite Endelement durch elastische Flachfedern mit mindestens zwei im Wesentlichen starren Säulen verbunden ist, die aus dem ersten Endelement hervorragen, wobei die elastischen Flachfedern die eingeschränkte axiale Bewegung gestatten.

7. Ein Mechanismus wie in einem der vorstehenden Ansprüche beansprucht, wobei die flexiblen Streben eine uneinheitliche Flexibilität entlang ihrer Länge besitzen, die flexible Abschnitte in der Nähe jedes Endes besitzt, die durch einen im Wesentlichen unflexiblen Abschnitt verbunden sind.

8. Ein Mechanismus wie in einem der vorstehenden Ansprüche beansprucht, wobei die ersten und zweiten Endelemente, das Zwischenelement und die flexiblen Streben miteinander integral und aus einem einzigen Materialblock geformt sind.

9. Ein Mechanismus wie in einem der vorstehenden Ansprüche beansprucht, wobei die ersten und zweiten Endelemente im Allgemeinen ringförmig sind, eine mittlere Öffnung durch den Mechanismus definieren, so dass der Mechanismus verwendet werden kann, um eine Vorbelastung auf ein Lager aufzubringen, wobei das Lager an einer Welle ist, die sich durch die mittlere Öffnung des Mechanismus erstreckt.

## Revendications

1. Mécanisme d'application de force (10) comprenant des premier et second éléments d'extrémité (12, 14) espacés suivant un axe longitudinal et liés de telle sorte qu'ils peuvent subir un déplacement axial limité l'un par rapport à l'autre, et un élément intermédiaire (22) disposé entre les premier et second éléments d'extrémité et relié au premier élément d'extrémité et au second élément d'extrémité par des entretoises souples (30) en des emplacements qui, en vue en coupe transversale, forment un réseau bidimensionnel, **caractérisé par le fait que** toutes les entretoises souples entre l'élément intermédiaire et le premier élément d'extrémité ont des directions de flexion préférées qui sont parallèles les unes aux autres et à une direction transversale, et les entretoises souples entre l'élément intermédiaire et le second élément d'extrémité ont des directions de flexion préférées qui sont parallèles les unes aux autres et à ladite direction transversale.

2. Mécanisme selon la revendication 1, dans lequel les entretoises souples entre l'élément intermédiaire et le premier élément d'extrémité sont agencées en groupes d'entretoises adjacentes et les groupes sont agencés en des emplacements tels qu'en vue en coupe transversale, les emplacements forment un réseau bidimensionnel, et les entretoises souples entre l'élément intermédiaire et le second élément d'extrémité sont agencées en groupes d'entretoises adjacentes et les groupes sont agencés en des emplacements tels sorte qu'en vue en coupe transversale, les emplacements forment un réseau bidimensionnel.

3. Mécanisme selon la revendication 2, dans lequel le réseau d'emplacements a une symétrie de rotation suivant l'axe.

4. Mécanisme selon l'une quelconque des revendications précédentes, dans lequel les entretoises souples sur des côtés opposés de l'élément intermédiaire sont fixées à l'élément intermédiaire directement opposées les unes aux autres.

5. Mécanisme selon l'une quelconque des revendications précédentes, dans lequel les entretoises souples sont agencées en groupes d'entretoises adjacentes sur les deux côtés de l'élément intermédiaire et il y a le même nombre d'entretoises à l'intérieur de chaque groupe.

6. Mécanisme selon l'une quelconque des revendications précédentes, dans lequel le second élément d'extrémité est lié par des ressorts plats élastiques à au moins deux piliers sensiblement rigides se projetant à partir du premier élément d'extrémité, les ressorts plats élastiques autorisant le déplacement axial limité.

7. Mécanisme selon l'une quelconque des revendications précédentes, dans lequel les entretoises souples ne sont pas d'une souplesse uniforme sur leur longueur, ayant des parties souples, proches de chaque extrémité, liées par une partie sensiblement non souple.

8. Mécanisme selon l'une quelconque des revendications précédentes, dans lequel les premier et second éléments d'extrémité, l'élément intermédiaire et les entretoises souples sont formés d'un seul tenant et sont formés à partir d'un unique bloc de matériau.

9. Mécanisme selon l'une quelconque des revendications précédentes, dans lequel les premier et second éléments d'extrémité sont globalement en forme d'anneau, définissant une ouverture centrale à travers le mécanisme, de telle sorte que le mécanisme peut être utilisé pour appliquer une précontrainte sur un palier, lorsque le palier se trouve sur un arbre qui s'étend à travers l'ouverture centrale du mécanisme.
